# EUROPÄISCHE PATENTSCHRIFT

(11) **EP 1 390 229 B1**
(45) Veröffentlichungstag und Bekanntmachung des Hinweises auf die Patenterteilung: **23.01.2008**
(21) Anmeldenummer: 02758199.0
(22) Anmeldetag: 22.05.2002
(51) Int. Cl.: B60N 2/24, B61D 33/00

(54) **HÖHENVERSTELLBAR CANTILEVER-SITZBEFESTIGUNG**
HEIGHT-ADJUSTABLE CANTILEVER SEAT FIXING
FIXATION DE SIEGE

(30) Priorität: 22.05.2001 DE 10126404
(43) Veröffentlichungstag der Anmeldung: 25.02.2004
(73) Patentinhaber: Bombardier Transportation GmbH, 10785 Berlin (DE)
(72) Erfinder: GELBERT, Lutz, 12555 Berlin (DE)
(74) Vertreter: Cohausz & Florack
(86) Internationale Anmeldenummer: PCT/EP2002/005609
(87) Internationale Veröffentlichungsnummer: WO 2002/098701

(56) Entgegenhaltungen:
- EP-A- 0 842 806
- DE-A- 2 646 203
- DE-A- 19 547 095
- US-A- 3 897 974
- US-A- 5 839 787

## Beschreibung

Die Erfindung betrifft eine Sitzbefestigung gemäß dem Oberbegriff des Anspruchs 1. Die Erfindung ist geeignet für - aber nicht beschränkt auf - den Einsatz in Schienenfahrzeugen für den Personenverkehr.

Cantilever-Sitzhalterungen werden üblicherweise in zwei C-Schienen befestigt, von denen mindestens die obere in einer Seitenwand und die untere in einer fußbodennahen Seitenwand oder in einem wandnahen Fußbodenbereich angeordnet wird.
Da die Lage dieser Befestigungsstellen für die Sitzuntergestelle sowohl von Schienenfahrzeug zu Schienenfahrzeug als auch häufig von einem Bereich zu einem anderen Bereich eines Schienenfahrzeugs konstruktionsbedingt selten identisch ist (Sitztypen, Höhenpositionierung und Sitzrasterungen sind meist unterschiedlich) müssen zum Ausgleich dieser Unterschiede die Sitzuntergestelle angepasst werden. Dazu gibt es eine Vielzahl unterschiedlichster Konstruktionen, um zum Beispiel die Sitzhöhe zu verändern. Insbesondere die Bereitstellung einer Vielzahl vom Sitzuntergestellen ist jedoch mit einem hohen Kostenaufwand verbunden.
Die EP 0 628 468 B1 beschreibt eine derartige Sitzbefestigung an den vertikalen Seiten einer Gerippestruktur, wobei die Gerippestruktur eine Sitzschiene, eine Schrägverbindungsaufnahme, Seitenwandsäulen und/oder Konsolen als vertikale Elemente und einen Boden enthält. Die Sitzbefestigung selbst enthält einen waagerechten oberen Querträger und eine nach unten führende Schrägverbindung. Der waagerechte Querträger und die Schrägverbindung sind ortsfest und starr miteinander verbunden. Der Querträger ist an vertikalen Elementen der Gerippestruktur, die Schrägverbindung ist an vertikalen Elementen oder im Eckbereich zwischen vertikalen Elementen und Boden festgelegt. An ihrem unteren Ende stützt sich die Schrägverbindung über eine Schrägverbindungsaufnahme ab. Diese enthält ein torsionssteifes Element oder ist mit einem solchen starr verbunden. Das torsionssteife Element erstreckt sich dabei über wenigstens die Länge der Sitzanordnung innerhalb der Gerippestruktur. Es besteht aus einem Hohlkammerprofil oder einem Randprofil einer Bodenplatte. Die Schrägverbindungsaufnahme ist dabei oberhalb des Hohlkammerprofiles bzw. des Randprofiles mit diesem starr verbunden. Für alle vom Ausgangszustand abweichende Gerippestrukturen, Befestigungspunkte und/oder Sitzhöhen muss die Sitzbefestigung konstruktiv verändert und angepasst werden.

Aufgabe der Erfindung ist es, die beschriebenen Nachteile des Standes der Technik zu beseitigen und insbesondere eine Sitzbefestigung vorzuschlagen, die unabhängig von den üblichen Höhen- und Lageschwankungen der Verbindungspunkte, insbesondere der C-Schienen flexibel eingesetzt werden kann. Durch diese Flexibilität soll die Vielzahl unterschiedlicher Sitzhalterungen reduziert werden, zugunsten einer niedrigeren Preisgestaltung. Dabei sollen möglichst drei oder mehr unterschiedliche Sitzhöhen (zwischen dem Einstellbereich ΔH ≅120mm) voreingestellt und einfach montiert werden können. Gleichzeitig sollen auch unterschiedliche Sitzschalendicken oder verschiedenartige Polstersysteme von unterschiedlichen Hersteller in der funktionell erforderlichen Sitzhöhe auf im wesentlichen konstruktiv identischen Sitzbefestigungen positioniert werden können.

Diese Aufgabe wird durch eine Sitzbefestigung gemäß den Merkmalen der Ansprüche 1 und 2 gelöst.
Zweckmäßige Ausgestaltungen und Weiterbildungen der Erfindung sind in den Unteransprüchen angegeben.
Die erfindungsgemäße Sitzbefestigung beinhaltet mindestens einen horizontalen Träger, der an einer Seite an vertikalen Elementen befestigt ist und mindestens eine Traverse, die an ihrem einen Ende über einen ersten Gelenkpunkt mit dem horizontalen Träger und an ihrem anderen Ende über einen zweiten Gelenkpunkt mit den vertikalen Elementen und/oder in der Nähe eines Eckbereiches zwischen den vertikalen Elementen und einem Boden mit dem Boden verbunden ist. Dabei ist der horizontale Träger mit einem Seitenwandadaptionselement an einem oberen Verbindungspunkt an den vertikalen Elementen höhenverstellbar befestigt, wobei das Seitenwandadaptionselement mindestens zwei Aufnahmestellen für den horizontalen Träger und/oder den oberen Verbindungspunkt aufweist, so dass unterschiedliche Traghöhen des horizontalen Trägers herstellbar sind. Dabei ist entweder der erste Gelenkpunkt am horizontalen Träger längsverschieblich und feststellbar ausgebildet, oder die Traverse ist längsveränderlich und längenfixierbar ausgebildet. Es ist auch möglich, die Traverse als Doppeltraverse, d. h. zweigeteilt, insbesondere oberhalb und unterhalb des horizontalen Trägers auszuführen, um die Querbeschleunigungen, falls erforderlich, besser aufzunehmen.
Die Vorteile der erfindungsgemäßen Lösung liegen in einem vereinheitlichten Cantileverstützsystem für Fahrzeugsitze, die unterschiedliche Trag- oder Sitzhöhen aufweisen können. Weiterhin vorteilhaft ist, dass an den vertikalen Elementen, an denen die erfindungsemäße Sitzbefestigung angeordnet ist, keine zusätzlichen Verbindungspunkte, inklusive der dafür erforderlichen Verbindungselemente für unterschiedliche Sitzhöhen erforderlich sind.

Die Erfindung wird anhand der in den Zeichnungen dargestellten Ausführungsbeispiele nachfolgend näher erläutert. Es zeigen schematisch und nicht maßstäblich
- Fig. 1: eine Cantilever-Sitzbefestigung,
- Fig. 2: einen Ausschnitt der Sitzbefestigung mit höhen veränderlichem horizontalen Träger,
- Fig. 3: einen Auschnitt der Sitzbefestigung mit einer Traverse in gekrümmter Ausführung,
- Fig. 4: eine Alternative zu Fig. 3 mit einer Traverse in ungekrümmter Ausführung und
- Fig. 5: eine Alternative zu Fig. 2 mit um 180° drehbarem horizontalen Träger.

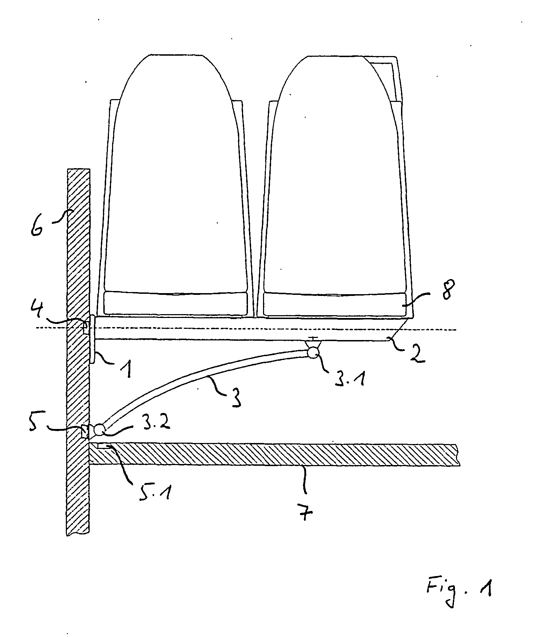

**Fig. 1** zeigt eine Cantilever-Sitzbefestigung, die aus drei Hauptelementen, nämlich einem Seitenwandadaptionselement **1,** einem horizontalen Träger **2** und einer als Schrägverbindung ausgebildeten Traverse **3** besteht.
Der horizontale Träger **2** ist mit seinem Seitenwandadaptionselement **1** an einem oberen Verbindungspunkt, in diesem Ausführungsbeispiel an einer oberen C-Schiene **4,** welche an einer Seitenwand **6** eines Wagenkastens eines Schienenfahrzeugs angeordnet ist, befestigt.
Die Traverse **3** ist mit einem Ende am horizontalen Träger **2** und mit dem anderen Ende an einem unteren Verbindungspunkt, insbesondere mit einer unteren C-Schiene **5** an der Seitenwand **6** oder einer Aufnahme **5.1** im wandnahen Bereich eines Fußbodens **7** des Wagenkastens befestigt.
Zur Erhöhung der Flexibilität ist es auch möglich, sowohl eine untere C-Schiene **5** an der Seitenwand **6** als auch eine Aufnahme **5.1** im wandnahen Bereich vorzusehen.

Zur Anpassung an die gewünschte Sitzhöhe sind das Seitenwandadaptionselement **1,** der horizontale Träger **2** sowie die Traverse **3** form- oder kraftschlüssig und bedingt lösbar miteinander verbunden. Sie haben zur Anpassung an die erforderliche Trag- oder Sitzhöhe einen ersten Gelenkpunkt **3.1** und einen zweiten Gelenkpunkt **3.2,** die nach der Einstellung der notwendigen Winkelstellung zwischen den Bauteilen der Sitzbefestigung zueinander und zur Seitenwand kraftschlüssig und/oder formschlüssig fixiert werden können und dadurch ein formstabiles Tragsystem für Sitzschalen **8,** die auf dem horizontalen Träger **2** angeordnet sind, ergeben. Dabei ist der erste Gelenkpunkt **3.1,** welcher die Verbindung zwischen Traverse **3** und horizontalem Träger **2** herstellt, am horizontalen Träger **2** verschiebbar und feststellbar ausgebildet, wenn eine Traverse **3** mit unveränderlicher Länge vorgesehen ist. Alternativ hierzu ist die Position des Gelenkpunktes **3.1** festgelegt, dafür aber die Traverse **3** in ihrer Länge veränderlich und feststellbar ausgebildet.
Zur Anpassung der Sitzbefestigung an unterschiedliche Wandformen oder -winkel kann die Verbindung zwischen Seitenwandadaptionselement **1** und horizontalem Träger **2** verschwenkbar ausgebildet sein. Ein Kontur- oder Winkelausgleich kann auch durch Beilagen, z. B. zwischen Seitenwandadaptionselement **1** und Seitenwand **6** oder andere gleichwirkende Mittel erfolgen.

**Fig. 2** zeigt einen Ausschnitt der Sitzbefestigung mit höhenveränderlichem horizontalen Träger und stellt die höhenveränderbare Verbindung zwischen den Sitztragelementen, im wesentlichen bestehend aus dem horizontalen Träger **2** und der Traverse **3,** und der oberen C-Schiene **4** in der Seitenwand **6** dar, wobei der horizontale Träger **2** in mindestens zwei unterschiedlichen Höhen an der C-Schiene **4** mittels des Seitenwandadaptionselementes **1** fixiert werden kann.
Das Seitenwandadaptionselement **1** enthält zu diesem Zweck ein bis drei oder auch mehr Aufnahmestellen für den horizontalen Träger **2** und/oder die C-Schiene **4.** Dadurch ergeben sich mehrere unterschiedliche Höheneinstellungen für die Sitzpositionierung, wenn die über- oder untereinander angeordneten Aufnahmestellen alternativ genutzt werden.
Die Anordnung mehrerer, gleichzeitig verwendeter Verbindungspunkte in gleicher Höhenlage, insbesondere bei Verwendung von mehr als einer Traverse ist sinnvoll, um Beschleunigungskräfte in Fahrtrichtung sicherer zu übertragen.
Die Anzahl der einstellbaren Höhen kann, wenn erforderlich, durch asymmetrische Ausführung des Seitenwandadaptionselements **1** und dessen vertikale 180°-Drehung bzw. durch Drehung des Seitenwandadaptionselementes **1** um eine horizontale, senkrecht zur Seitenwand 6 verlaufende gedachte Achse erweitert werden.
Der horizontale Träger **2** dient der Befestigung verschiedenartiger Sitzschalen **8** (auch mit unterschiedlicher Polsterdicke). Die bei Belastung der Sitze auftretenden vertikalen Kräfte werden einerseits als Zugkraft durch die Verbindung mit der oberen C-Schiene **4** in die Seitenwand **6,** andererseits als Druckkraft durch die Traverse **3** auf die untere C-Schiene **5** oder die Aufnahme **5.1** im wandnahen Fußbodenbereich übertragen.

Der horizontale Träger **2** kann dabei sowohl einstückig (z. B. aus einem stabförmigen offenen oder geschlossenen Strangpress-, Walz- oder Faserverbundprofil) ausgebildet als auch mehrstückig (z. B. in Form eines Rahmens aus mehreren Stücken besagter Profile) zusammengesetzt und für die Aufnahme einer einzelnen Sitzschale, mehrerer nebeneinanderliegender und/oder hintereinander (d. h. mit den Rückseiten einander zugewandt) angeordneter Sitzschalen vorgesehen sein.

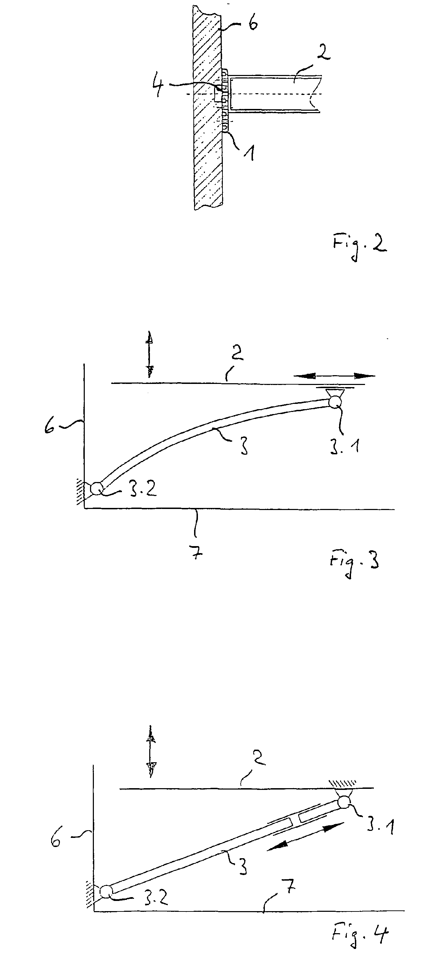

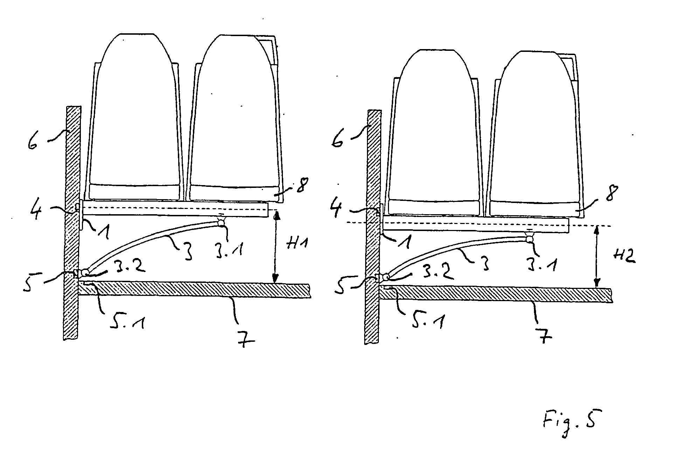

Die Traverse **3** dient der Abstützung des horizontalen Trägers **2.** Durch die gelenkigen Traversenenden an den Gelenkpunkten **3.1** und **3.2** kann die Traverse **3** bei unveränderbarer Länge durch horizontale Verschiebung des Gelenkpunktes **3.1** am horizontalen Träger **2,** wie in **Fig. 3** dargestellt, oder bei fester Positionierung (Festlager) des Gelenkpunktes **3.1** am horizontalen Träger **2** durch längenveränderbare Ausführung der Traverse **3,** wie in **Fig. 4** dargestellt, in unterschiedlichen Winkelstellungen für die Kraftleitung wirksam werden.
Die Längenveränderbarkeit der Traverse **3** ist z. B. durch eine geteilte Ausbildung der Traverse mit längsverschieblicher, aber nachfolgend formschlüssiger Verbindung ihrer Teile zu erzeugen. Bei einer anderen Ausgestaltung der Erfindung werden einfach nur vorgefertigte Traversen unterschiedlicher Länge ausgewählt und montiert.
Die Traverse **3** kann ungekrümmt, d. h. gerade oder geschwungen ausgeführt werden. Die geschwungene Ausführungsvariante schafft verbesserte Beinfreiheit.

Das Seitenwandadaptionselement **1** und der horizontale Träger **2** können auch in einer festen Verbindung (z. B. verschweißt) vereinigt werden, wenn die Anzahl der einstellbaren Höhenunterschiede geringer und der horizontale Träger **2** achssymmetrisch ausgeführt sein kann, wie in **Fig. 5** dargestellt.

In diesem Fall kann das Seitenwandadaptionselement **1** gemeinsam mit dem horizontalen Träger **2** durch Drehung um eine gedachte horizontale Achse in zwei unterschiedlichen Höhenlagen **H1; H2** montiert werden.

## Patentansprüche

1. Sitzbefestigung, insbesondere für Schienenfahrzeuge, beinhaltend einen horizontalen Träger **(2),** der an einer Seite an vertikalen Elementen befestigt ist und mindestens eine Traverse **(3),** die an ihrem einen Ende mit dem horizontalen Träger **(2)** und an ihrem anderen Ende mit den vertikalen Elementen und/oder in der Nähe eines Eckbereiches zwischen den vertikalen Elementen und einem Boden mit dem Boden verbunden ist,
**dadurch gekennzeichnet,**
- **dass** der horizontale Träger **(2)** mittels eines Seitenwandadaptionselements **(1)** an einem oberen Verbindungspunkt an den vertikalen Elementen festlegbar ist, wobei das Seitenwandadaptionselement **(1)** mindestens zwei Aufnahmestellen für den horizontalen Träger **(2)** und/oder den oberen Verbindungspunkt aufweist, die unterschiedliche Traghöhen des horizontalen Trägers **(2)** bewirken,
- **dass** das mit dem horizontalen Träger **(2)** verbundene Ende der Traverse **(3)** als ein erster Gelenkpunkt **(3.1)** ausgebildet ist,
- **dass** das andere Ende der Traverse **(3)** als ein zweiter Gelenkpunkt **(3.2)** ausgebildet ist und
- **dass** der erste Gelenkpunkt **(3.1)** entlang des horizontalen Trägers **(2)** verschieblich ausgebildet ist.

2. Sitzbefestigung, insbesondere für Schienenfahrzeuge, beinhaltend einen horizontalen Träger **(2),** der an einer Seite an vertikalen Elementen befestigt ist und mindestens eine Traverse **(3),** die an ihrem einen Ende mit dem horizontalen Träger **(2)** und an ihrem anderen Ende mit den vertikalen Elementen und/oder in der Nähe eines Eckbereiches zwischen den vertikalen Elementen und einem Boden mit dem Boden verbunden ist,
**dadurch gekennzeichnet,**
- **dass** der horizontale Träger **(2)** mittels eines Seitenwandadaptionselements **(1)** an einem oberen Verbindungspunkt an den vertikalen Elementen festlegbar ist, wobei das Seitenwandadaptionselement **(1)** mindestens zwei Aufnahmestellen für den horizontalen Träger **(2)** und/oder den oberen Verbindungspunkt aufweist, die unterschiedliche Traghöhen des horizontalen Trägers **(2)** bewirken,
- **dass** das mit dem horizontalen Träger **(2)** verbundene Ende der Traverse **(3)** als ein erster Gelenkpunkt **(3.1)** ausgebildet ist,
- **dass** das andere Ende der Traverse **(3)** als zweiter Gelenkpunkt **(3.2)** ausgebildet ist und
- **dass** die Traverse **(3)** längenveränderlich und längenfeststellbar ausgebildet ist.

3. Sitzbefestigung nach Anspruch 1 oder 2, **dadurch gekennzeichnet, dass** zur Anpassung an die gewünschte Sitzhöhe das Seitenwandadaptionselement **(1),** der horizontale Träger **(2)** sowie die Traverse **(3)** form- und/oder kraftschlüssig und bedingt lösbar miteinander verbunden sind.

4. Sitzbefestigung nach einem der Ansprüche 1 bis 3, **dadurch gekennzeichnet, dass** der obere Verbindungspunkt eine C-Schiene **(4)** oder ein anderes fixes Aufnahmeelement in der Wand ist.

5. Sitzbefestigung nach einem der Ansprüche 1 bis 4, **dadurch gekennzeichnet, dass** die Traverse **(3)** mit einer Seite am horizontalen Träger **(2)** und mit der anderen Seite an einem unteren Verbindungspunkt, insbesondere einer C-Schiene **(5)** und/oder einer Aufnahme **(5.1)** mit den vertikalen Elementen, insbesondere einer Seitenwand **(6)** und/oder in der Nähe eines Eckbereiches zwischen den vertikalen Elementen und einem Boden, insbesondere einem Fußboden **(7)** angeordnet, insbesondere befestigt ist.

6. Sitzbefestigung nach einem der Ansprüche 1 bis 5, **dadurch gekennzeichnet, dass** das Seitenwandadaptionselement **(1)** und/oder der horizontale Träger **(2)** so asymmetrisch und drehbar und feststellbar ausgeführt sind, dass eine Drehung des Seitenwandadaptionselementes **(1)** und/oder des horizontalen Trägers **(2)** um einen bestimmten Winkel, insbesondere um 180° eine unterschiedliche Sitzhöhe bewirkt.

7. Sitzbefestigung nach einem der Ansprüche 1 bis 6, **dadurch gekennzeichnet, dass** die Traverse **(3)** einen ersten, insbesondere feststellbaren Gelenkpunkt **(3.1)** zur gelenkigen Verbindung mit dem horizontalen Träger **(2)** und einen zweiten, insbesondere feststellbaren Gelenkpunkt **(3.2)** zur gelenkigen Verbindung mit dem unteren Verbindungspunkt aufweist.

8. Sitzbefestigung nach einem der Ansprüche 1 bis 7, **dadurch gekennzeichnet, dass** die Traverse **(3)** längenveränderlich, insbesondere feststellbar längenveränderlich und/oder der erste Gelenkpunkt **(3.1)** längsverschieblich, insbesondere feststellbar längsverschieblich am horizontalen Träger **(2)** angeordnet ist.

## Claims

1. Seat attachment, particularly for rail vehicles, involving a horizontal carrier (2), which is fixed on one side to vertical elements and at least one cross-member (3), one end of which is connected to the horizontal carrier (2) and the other end of which is connected to the vertical elements and/or to the floor in the vicinity of a corner area between the vertical elements and the floor,
**characterised in that**,
- the horizontal carrier (2) is connectable to an upper connection point on the vertical elements by means of a side wall adaptation element (1), with the side wall adaptation element (1) having at least two receiving points for the horizontal carrier (2) and/or the upper connection point, which result in different carrying heights of the horizontal carrier (2),
- the end of the cross-member (3) connected to the horizontal carrier (2) is designed as an initial articulation point (3.1),
- the other end of the cross-member (3) is designed as a second articulation point (3.2) and
- the first articulation point (3.1) is designed to be slidable along the horizontal carrier (2).

2. Seat attachment, particularly for rail vehicles, involving a horizontal carrier (2), which is fixed on one side to vertical elements and at least one cross-member (3), one end of which is connected to the horizontal carrier (2) and the other end of which is connected to the vertical elements and/or to the floor in the vicinity of a corner area between the vertical elements and the floor,
**characterised in that**,
- the horizontal carrier (2) is connectable to an upper connection point on the vertical elements by means of a side wall adaptation element (1), with the side wall adaptation element (1) having at least two receiving points for the horizontal carrier (2) and/or the upper connection point, which result in different carrying heights of the horizontal carrier (2),
- the end of the cross-member (3) connected to the horizontal carrier (2) is designed as an initial articulation point (3.1),
- the other end of the cross-member (3) is designed as a second articulation point (3.2) and
- the cross-member (3) is designed to be modifiable in length and securable in length.

3. Seat attachment according to claim 1 or claim 2, **characterised in that** for adaptation to the desired seat height, the side wall adaptation element (1), the horizontal carrier (2) and the cross-member (3) have a positive and/or non-positive and partly separable connection to one another.

4. Seat attachment according to one of claims 1 to 3, **characterised in that** the upper connection point is a C-rail (4) or another fixed receiving element in the wall.

5. Seat attachment according to one of claims 1 to 4, **characterised in that** the cross-member (3) is particularly secured with one side on the horizontal carrier (2) and with the other side on a lower connection point, particularly a C-rail (5) and/or a receptacle (5.1) to the vertical elements, particularly to a side wall (6) and/or in the vicinity of a corner area arranged between the vertical elements and a base, particularly a floor (7).

6. Seat attachment according to one of claims 1 to 5, **characterised in that that** side wall adaptation element (1) and/or the horizontal carrier (2) are designed in an asymmetrical, rotatable and securable manner such that rotating the side wall adaptation element (1) and/or the horizontal carrier (2) through a specific angle, particularly 180° results in a different seat height.

7. Seat attachment according to one of claims 1 to 6, **characterised in that that** cross-member (3) has a first, particularly securable, articulation point (3.1) for articulated connection with the horizontal carrier (2) and a second, particularly securable, articulation point (3.2) for articulated connection with the lower connection point.

8. Seat attachment according to one of claims 1 to 7, **characterised in that** the cross-member (3) is arranged to be modifiable in length, particularly securably modifiable in length and/or the first articulation point (3.1) is arranged to be slidable lengthways, particularly securably slidable lengthways on the horizontal carrier (2).

## Revendications

1. Fixation de siège, en particulier destinée à des véhicules ferroviaires, comportant un support horizontal (2), qui est fixé d'un côté aux éléments verticaux et au moins une traverse (3), qui est reliée d'un côté au support horizontal (2), et de l'autre côté aux éléments verticaux et/ou est reliée au sol à proximité d'une zone angulaire se trouvant entre les éléments verticaux et un sol,
**caractérisée en ce que** :
- le support horizontal (2) peut être fixé à l'aide d'un élément d'adaptation sur les parois latérales (1), au niveau d'un point de raccordement supérieur, sur les éléments verticaux, moyennant quoi l'élément d'adaptation sur les parois latérales (1) présente au moins deux emplacements de réception pour le support horizontal (2) et/ou le point de raccordement supérieur, qui permettent d'obtenir les différentes hauteurs de maintien du support horizontal (2),
- l'extrémité reliée au support horizontal (2) de la traverse (3) est configurée sous la forme d'un premier point d'articulation (3.1),
- l'autre extrémité de la traverse (3) est configurée sous la forme d'un deuxième point d'articulation (3.2) et
- le premier point d'articulation (3.1) est configuré de manière à pouvoir se déplacer le long du support horizontal (2).

2. Fixation de siège, en particulier destinée à des véhicules ferroviaires, comportant un support horizontal (2), qui est fixé d'un côté aux éléments verticaux et au moins une traverse (3), qui est reliée au niveau d'une extrémité au support horizontal (2) et de l' autre extrémité aux éléments verticaux et/ou est reliée au sol à proximité de la zone angulaire se trouvant entre les éléments verticaux et le sol,
**caractérisée en ce que**,
- le support horizontal (2) peut être fixé sur les éléments verticaux à l'aide d'un élément d'adaptation sur les parois latérales (1) au niveau d'un point de raccordement supérieur, moyennant quoi l'élément d'adaptation sur les parois latérales (1) présente au moins deux emplacements de réception pour le support horizontal (2) et/ou le point de raccordement supérieur, qui permettent d'obtenir les différentes hauteurs de maintien du support horizontal (2),
- **en ce que** l'extrémité reliée au support horizontal (2) de la traverse (3) est configurée sous la forme d'un premier point d'articulation (3.1),
- l'autre extrémité de la traverse (3) est configurée sous la forme d'un deuxième point d'articulation (3.2) et
- la traverse (3) est configurée de manière à ce que sa longueur soit variable ou fixe.

3. Fixation de siège selon la revendication 1 ou 2, **caractérisée en ce que**, à des fins d'adaptation à la hauteur de siège souhaitée, l'élément d'adaptation sur les parois latérales (1), le support horizontal (2) ainsi que la traverse (3) sont reliés les uns aux autres par conjugaison de forme et/ou par engagement positif et de manière amovible dans certaines conditions.

4. Fixation de siège selon l'une quelconque des revendications 1 à 3, **caractérisée en ce que** le point de raccordement supérieur est un rail en C (4) ou un autre élément de réception fixe dans la paroi.

5. Fixation de siège selon l'une quelconque des revendications 1 à 4, **caractérisée en ce que** la traverse (3) est disposée, en particulier fixée d'un côté au support horizontal (2) et d'un autre côté à un point de raccordement inférieur, en particulier un rail en C (5) et/ou un logement (5.1) avec les éléments verticaux, en particulier une paroi latérale (6) et/ou est disposé, en particulier fixé à proximité d'une zone angulaire située entre les éléments verticaux et un sol, en particulier un plancher (7).

6. Fixation de siège selon l'une quelconque des revendications 1 à 5, **caractérisée en ce que** l'élément d'adaptation sur les parois latérales (1) et/ou le support horizontal (2) sont réalisés de manière asymétrique et de manière à pouvoir tourner et à pouvoir être fixés de telle sorte qu'une rotation de l'élément d'adaptation sur les parois latérales (1) et/ou du support horizontal (2) sur un angle déterminé, en particulier 180°, permet d'obtenir une hauteur de siège différente.

7. Fixation de siège selon l'une quelconque des revendications 1 à 6, **caractérisée en ce que** la traverse (3) comporte un premier point d'articulation (3.1), pouvant en particulier être fixé, permettant une liaison articulée avec le support horizontal (2), et un deuxième point d'articulation (3.2), en particulier pouvant être fixé, permettant une liaison articulée avec le point de raccordement inférieur.

8. Fixation de siège selon l'une quelconque des revendications 1 à 7, **caractérisée en ce que** la traverse (3) est disposée avec une longueur variable, en particulier avec une longueur variable qui peut être fixée, et/ou le premier point d'articulation (3.1) est disposé sur le support horizontal (2) de manière mobile dans le sens de la longueur, en particulier de manière mobile dans le sens de la longueur mais en pouvant être fixé.
